# EUROPEAN PATENT APPLICATION

(11) **EP 1 258 804 A1**
(43) Date of publication of application: **20.11.2002**
(21) Application number: 02291044.2
(22) Date of filing: 24.04.2002
(51) Int. Cl.: G06F 9/445, H04L 12/24

(54) **System and method for performing management activities on management objects in a computer network**

(30) Priority: 18.05.2001 NL 1018105
(71) Applicant: Atos Origin Telco Services B.V., 9728 HD Groningen (NL)
(72) Inventor: Straatman, Kornelis, 9932 GM Delfzijl (NL)
(74) Representative: de Roquemaurel, Bruno

(57) **Abstract**

The invention relates to a management system for the management of management objects that are connected to a computer network. Said management objects may be computer systems, but also other objects which are connected to the network, such as uninterrupted power supplies, printers or objects that are present in the computer systems which are connected to the network, such as files, data bases, registers.

In many cases, different management tools, each having their own characteristics and possibilities, are required for different forms of management. The invention provides a management system which ensures, among other things, that the management is organised and realised in an unequivocal and flexible manner for the management functionaries, inter alia by providing an unequivocal authorisation structure which ensures that management functionaries are authorised in an unequivocal manner for functions and management domains for various forms of management that can be carried out in combination with each other. Management instructions are input in a uniform manner via a preferably graphical user interface, after which said management instructions are translated by the management system into commands that are executed by known management tools.

## Description

### Field of the invention

The invention disclosed herein relates to the performance of management activities on management objects in a computer network.

### Prior art

The management of computers in a computer network by means of management tools, by means of which on the basis of a list of computers and management tools, such as the distribution of software packages by means of installation tools, by means of which the installation is carried out on the basis of a list of computers and previously prepared software packages with associated programmes and options and planning dates, are known. Examples thereof can be found in patent publications US 6,047,129; US 5,931,909; US 6,038,399 and US 6,038,856.

Such software installation systems can ensure, by means of a once-only specification of files and systems and actions, that the computer systems which are connected to the network meet the latest software configuration requirements. A manager can prepare a modification action plan on the basis of the desired software configuration on one or more management objects, which action plan is stored in an action list in a database.

Besides information on the computer systems and the software configuration, said action plan also includes the dates on which the modification operation is to be carried out. The operation may consist of an activity at one point in time, when the software is placed on the systems to be modified, after which the actual installation is carried out at another point in time. The selection of said points in time is determined by the availability of the computers that qualify for software configuration modifications.

An example of a commercially available software distribution system is Tivoli.

Another example is the monitoring of computer systems and the setting of monitoring parameters and threshold values. A manager can realise these settings by means of a user interface associated with the monitoring package.

An example of a commercially available monitoring system is Patrol.

In order to have the entire management process take place properly, tuning of authorities is necessary.

Thus, one part of the management organisation may be responsible for making new software packages ready for use, whilst another part of the organisation may be responsible for the planning of management activities.

At the same time, one part of the management organisation may be responsible for the management of one part of the computer systems to be managed, whilst another part of the organisation may be responsible for the management of other computer systems.

One problem with existing management systems is the fact that frequently the use thereof is not geared to the responsible management organisation. In some management systems, every user of a management system can carry out all the activities that are possible within the system, whereas different managers or different parts of the management organisation are responsible for different parts of the process.
Other systems, intended for large and complex organisations, are arranged for regulating the management separately for each part of the organisation. These systems are often organised on a strong hierarchical basis and lack the flexibility that is required for carrying out configuration management with regard to aspects of the management for an entire organisation. In such a case it is not possible, for example, to take care of one or more aspects of the management for an entire organisation. For example, central management of all office applications or all UNIX workstations.

Other systems do provide for the assignment of authorisations to management functionaries for the performance of management activities on specific management objects. With those systems it is necessary to specify in great deal what activities the management functionary is allowed to perform on a specific management object.

Another problem is the fact that such management systems each have their own user interface. The consequence of this is that managers need to familiarise themselves with the specific characteristics of the various user interfaces. There is a need for a uniform user interface for different management systems.

The system that is disclosed in the present patent application provides a solution for these and other problems.

### Brief description of the invention

It is an object of the invention to provide a management system by means of which it can be realised that management functionaries will only be able to carry out activities for which they are authorised on management objects for which they are authorised.
The aforesaid management system controls an operational system consisting of one or more management tools by means of commands. Said management tools execute the aforesaid commands.

A further object of the invention is to realise a management system having a universal user interface.

A further object of the invention is to ensure that management functionaries of the management system are assigned a management function. A management function is built up of function components.

A further object of the invention is to incorporate one or more management activities in said function components.

Furthermore it is an object of the invention to assign a management function and a management domain to each management functionary. A management functionary can perform the function components associated with the aforesaid management function on the aforesaid management domain. A management domain is built up of management object groups. A management object group is built up of management objects.

Furthermore it is an object of the invention that the activities associated with a management activity be carried out.

### Brief description of the figures

Fig. 1 shows the prior art as regards the division of activities per manager of management objects to be managed.

Fig. 2 schematically shows a management system which is split up into a management system and management tools. The management system receives management instructions and translates these instructions into commands that are executed on management objects by management tools.

Fig. 3 shows the division of activities into function components in accordance with a preferred embodiment of the invention.

Fig. 4 shows the division of function components into management functions in accordance with a preferred embodiment of the invention.

Fig. 5 shows the division of the management objects into management object groups in accordance with a preferred embodiment of the invention.

Fig. 6 shows the division of management object groups into management domains in accordance with a preferred embodiment of the invention.

Fig. 7 shows the management function which a manager can perform on the management domain assigned to him in accordance with a preferred embodiment of the invention.

Fig. 8 shows the way in which various management tools are made available to management functionaries in a uniform manner by the management system according to the invention.

Fig. 9 shows the structure in which the invention can be implemented in accordance with a preferred embodiment of the invention.

Fig. 10 shows the example of a data model of a management system for a software distribution application in accordance with one embodiment of the invention.

### Detailed description

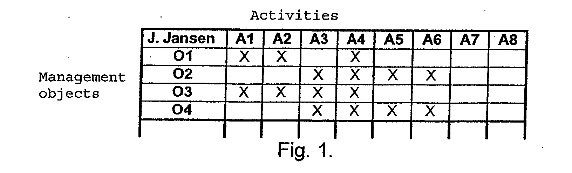

In a management organisation according to the prior art, management activities are linked with management objects to be managed for each management functionary. This division can be represented as a matrix as shown in Fig. 1. Thus, a management functionary may be authorised for management activities 1, 2 and 4 with regard to management object 1 and for management activities 3, 4, 5 and 6 with regard to management object 2. In this way it can be realised that management functionaries can only perform management activities for which they are authorised on management objects for which they are authorised. This method requires a very detailed specification, and consequently it is laborious and error prone.

The invention provides a management system in which authorisations with regard to management functions and authorisations with regard to the management objects to be managed are laid down. The management system according to the invention furthermore provides a user interface and a method for carrying out management instructions in accordance with commands stored in the system.

According to a preferred embodiment of the invention, said management system is built up in the form of a relational database. In this database, tables are created, in which tables information is stored. Said tables are subsequently linked in a manner prescribed for the invention. According to other embodiments, the invention may be realised in the form of an object-oriented programme, for example with C++, or in the form of a programme in a procedural language, for example with C, or with other languages. Information that is required for realising the invention is stored in associated data structures in that case.

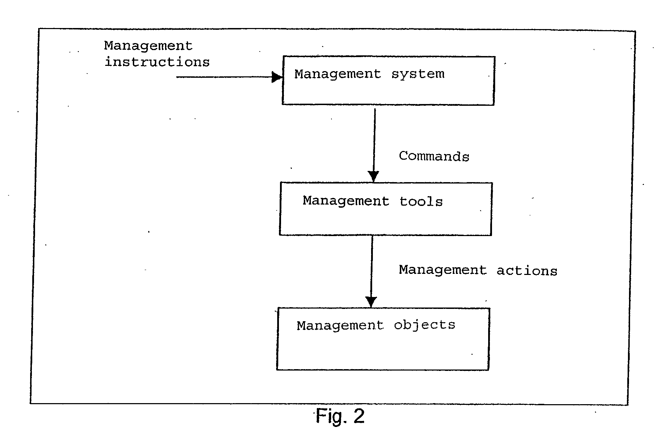

Said management system communicates with management functionaries, i.e. functionaries who are responsible for performing management tasks in a management organisation, on the one hand and with management tools capable of executing the aforesaid commands on the other hand. Management functionaries can perform their tasks by inputting data and management instructions (Fig. 2).

In a management system according to the invention, the management is split up into management functions which are performed by management functionaries. Examples of such management functions are: operational manager, configuration manager, modification manager, etc.

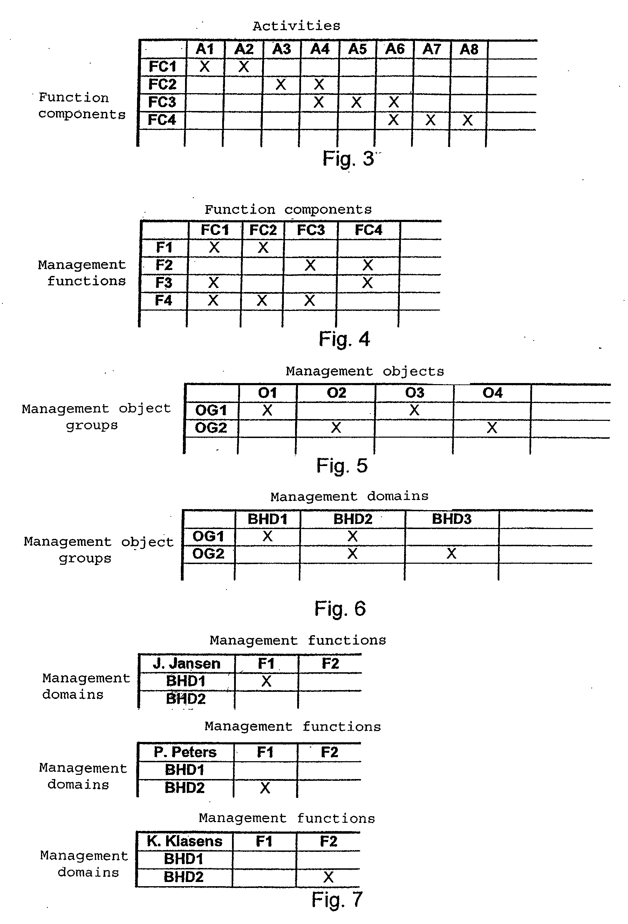

According to one embodiment of the invention, each management function is built up of function components (Fig. 4). Thus, a configuration manager may be responsible for adding new management objects, changing the configuration of existing management objects and removing the same, whilst a technical manager may be responsible for introducing new software packages and releasing the same.

Each function component is built up of management activities (Fig. 3). For example, the function component "introducing new software package" may consist of the management activities "installing the package on the server of the software library" and "adding software package data to the software library database".

According to another embodiment, a management function is built up of management activities as described above, that is, without function components.

According to the preferred embodiment of the invention, there is a list of management functions, a list of function components and a list of management activities. The lists of management functions and function components are stored in the aforesaid database in the form of tables. According to the invention, a database record from the aforesaid list of management functions refers to minimally one database record from the list of function components, and a database record from the list of function components refers to minimally one record from the list of management activities. Said reference functions are functions which are known to the man skilled in the art.

The management objects to be managed can be grouped in management object groups. A management object group comprises one or more management objects. A management object is associated with one or more management object groups. An example of the grouping of management objects in management object groups is shown in Fig. 5.
In the preferred embodiment of the invention, a management object is assigned to only one management object group. Examples of management objects are computer systems, UPS's, printers, files, data bases, all the objects that can be connected to a computer network or be stored therein.

The management object groups can be grouped in management domains. A management domain comprises one or more a management object groups. A management object group may be associated with one or more management domains. An example of the grouping of management object groups in management domains is shown in Fig. 6.

According to the preferred embodiment of the invention, there is a list of management objects and a list of management object groups. The two lists are stored in a database in the form of tables. According to the invention, a database record from the list of management object groups refers to minimally one database record from the list of management objects, and a database record from the list of management objects refers to exactly one database record from the list of management object groups.

According to the preferred embodiment of the invention, there is a list of management functionaries. Said list, which contains the user names or other specific characteristics of the aforesaid management functionaries, is stored in the aforesaid database in the form of a table. A management functionary is assigned one or more management functions from said list of management functions. Since function components are linked with the management function, said function components are thus assigned to a management functionary together with the management function.
In the preferred embodiment of the invention, only one management function is assigned to a management functionary.

According to the invention, one or more management domains are assigned to the management functionary. The assignment of management functions and management domains is shown in Fig. 7. In the preferred embodiment of the invention, only one management domain is assigned to a management functionary. The combinations of management functionary, management function and management domain are stored in the aforesaid database in the form of records in a table.

A management functionary must identify himself before he can carry out an operation with the management system. In a preferred embodiment of the invention, said identification can take place by logging in. Said logging in takes place via a user interface by inputting the functionary's user name and password. This is done in a way which is known to the man skilled in the art. According to other methods, to which the invention is not limited, access to the management system can be gained by means of an identification card with a PIN code or by finger or iris recognition. More than one management functionary may be active within the management system at the same time.

In one embodiment, the aforesaid user interface can be realised with a client-server system which is known to those skilled in the art, in which the interface means are present in the form of electronic forms in a so-called client.
Said second client is a software program, which is activated and run on a workstation of a management functionary. According to another embodiment, the user interface is realised in the form of a web server which communicates with a so-called browser, which the user interface calls as a web page.
Graphic objects are called by means of Java scripts or other programming means, which graphic objects make it possible to exchange information in the aforesaid database that communicates with the aforesaid web server.
According to the preferred embodiment of the invention, the management activities are enabled by means of web forms, menus and other known means which enable management functionaries to carry out their management instructions.
According to one example of the execution of a management instruction by means of a management activity in accordance with a preferred embodiment of the invention, one or more management activities are selected from a form in one list of options and selecting one or more management object groups on which said management activities are to be carried out from another form in another list of options. After the selections have been made, an activating button may be clicked, for example, after which the associated commands are placed in the aforesaid action table and the opened form is closed.
A great many possibilities for realising such means for carrying out management instructions via management activities are known to those skilled in the art.

According to the invention, the preferably graphical user interface means that must be available to management functionaries in accordance with their management function, the associated function components and the management activities are made accessible by said logging in. To that end, the user interface will consult, for example by means of Java scripts, the aforesaid database and the management activities therein for which the management functionary is authorised. The use of the user interface means of the management system which, according to the above description, are available to the management functionary is subsequently limited in accordance with the functionary's management domain, the associated management object groups and management objects, to said management objects.

In this way it is realised that management functionaries can only carry out those operations on the management objects for which they are authorised.

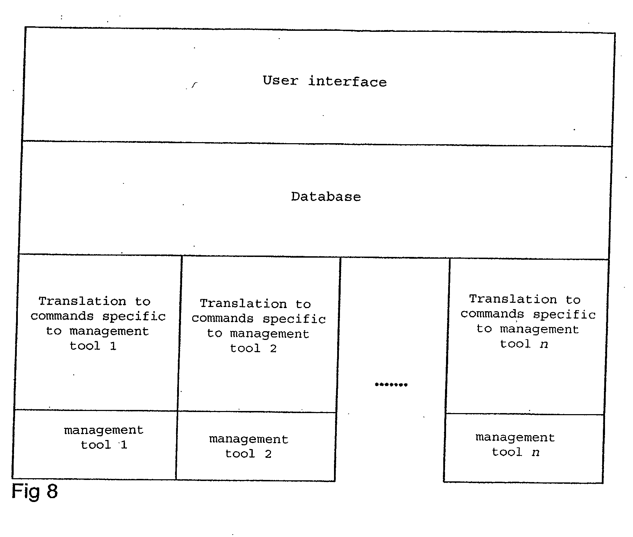

According to the invention, the operational performance of management activities takes place by means of management tools. Programmes or software packages such as Tivoli and Patrol are examples of this. These commands start program elements of the aforesaid management tools that have previously been stored in the computer network, which elements perform a specific management task.
Different management tools are made available to the management functionaries in a uniform manner by the management system according to the invention. This is shown in Fig. 8.

Stored in said list of management activities are, among others, one or more commands that control a management tool. When in a preferred embodiment of the invention a management activity is to be carried out on one or more of the management domains, management object groups or management objects that are available to the management functionary, the commands associated with said management activity are placed in an action table after activation. Said action table is a table from the aforesaid database. A so-called "daemon", i.e. a program which is active in the background, reads said action table and starts the program elements of the aforesaid management tools that are associated with said commands. Said program elements may continue to run either under the control of the "daemon" or run as independent programmes.

In another embodiment of the invention, the management activities to be carried out and the management objects on which said activities are to be carried out are stored in an action table. Said action table is a table in the aforesaid database. A "daemon" reads said action table, translates the management activities to be carried out into commands of the aforesaid management tools by means of a suitable program code and subsequently starts the program elements of the aforesaid management tools that are associated with said commands. Said program elements may continue to be active either under the control of the "daemon" or be active as independent programmes.

In another embodiment, commands from said action table that are associated with the management activities are transported, via communication means, to active management tools, which execute said commands themselves. Said transport can take place via so-called fifo's or buffers, for example.

In yet another embodiment, said action table, which contains commands to be executed, is linked with or read by active management tools, which executes said commands from the action table themselves.

In all four of the preceding embodiments it is registered which commands have already been executed.

Hereinafter an example is given of a preferred embodiment of the management system aimed at.

In this example of the preferred embodiment of the invention, the database is an Oracle database and the user interface is a Web interface.

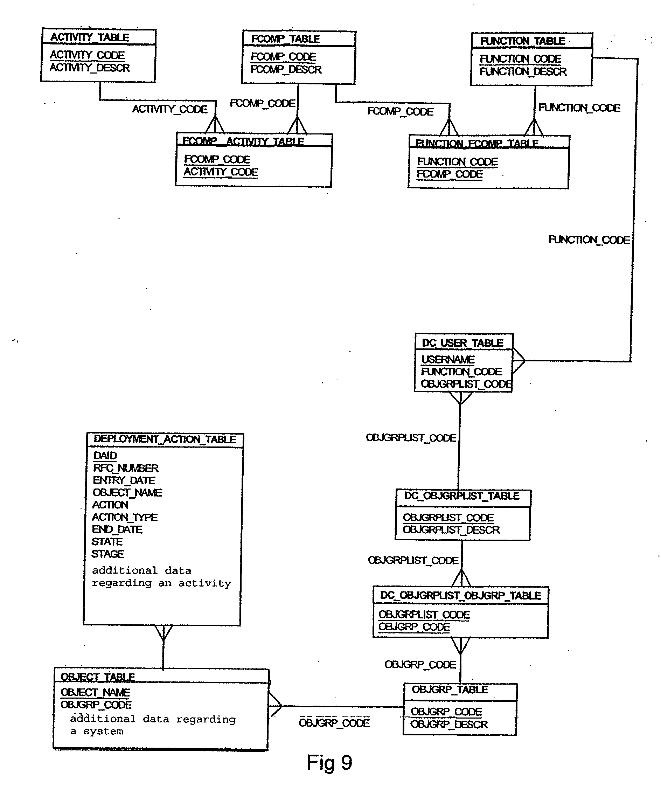

The database model for the authorisation that is used herein is shown in Fig. 9, in which also the relations between the various elements are represented.

In the ACTIVITY_TABLE all management activities are recorded in the form of a description and a unique code. Said code is further used internally in the database for identifying the management activities.

In the FCOMP_TABLE all function components are recorded in the form of a description and a unique code. Said code is further used internally in the database for identifying the function components.

In the FCOMP_ACTIVITY_TABLE the composition of the function components from the management activities is recorded.

In the FUNCTION_TABLE all management functions are recorded in the form of a description and a unique code. Said code is further used internally in the database for identifying the management functions.

In the OBJGRP_TABLE all management object groups are recorded in the form of a description and a unique code. Said code is further used internally in the database for identifying the management object group.

In the OBJECT_TABLE the various management objects are recorded in the form of their name and the code of the management object group with which the management object is associated. Also recorded in said table are the data on the management object that are required in order to make it possible to carry out the management activities.

In the OBJGRPLIST_TABLE the various management domains are recorded in the form of a description and a unique code. Said code is further used internally in the database for identifying the management domain.

In the OBJGRPLIST_OBJGROP_TABLE the composition of the various management domains is recorded by linking the required management object group codes to the management domain code.

In the USER_TABLE the management functionaries are registered and said management functionaries are assigned a management function and a management domain in the form of a user name, a management function code and a management domain code.

In the DEPLOYMENT_ACTION_TABLE, the activities that can be translated by a "daemon" into commands of a management tool such as Tivoli and subsequently be executed are recorded as an example of an action table.

Hereinafter an example is given of an embodiment of the management system aimed at, which management system is used for the distribution of software to computer systems.

In this example of an embodiment of the invention, the example as described above is carried out by using Tivoli Software Distribution as the management tool and realising a process which translates the data in the Oracle database into commands for Tivoli Software Distribution and which executes said commands.

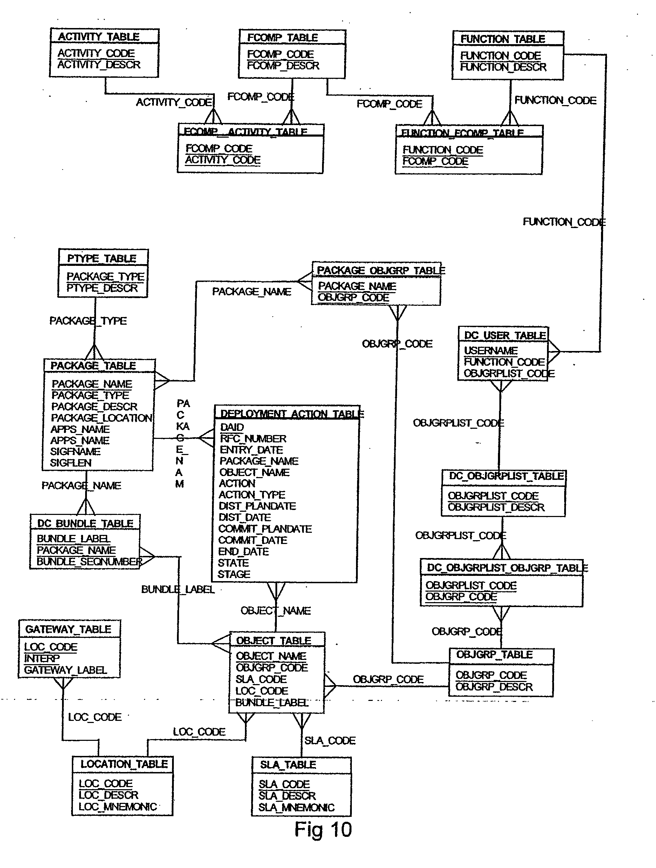

The complete database model for this example of the preferred embodiment is shown in Fig. 10. Those tables of Fig. 10 that are not shown in Fig. 9 are specific for the application of software distribution to computer systems.
A management system according to the invention can therefore be specifically adapted for various applications.

## Claims

1. A management system for carrying out management instructions, comprising
• a network for connecting computers and enabling said computers to communicate,
• at least two computers connected to said network and communicating over said network,
• a user interface for inputting data and management instructions, which is active on one or more of said computers,
• a programme which has been installed on and is active on at least one of said computers, which programme comprises data structures and means for authorising management functionaries for management functions and management domains and which translates management instructions into commands for said management tools.

2. A management system according to claim 1, **characterised in that** a management functionary may have one or more authorisations.

3. A management system according to the preceding claims, **characterised in that** an authorisation consists of the linking of a user name, a management function and a management domain.

4. A management system according to the preceding claims, **characterised in that** a management function is built up of at least one function component.

5. A management system according to the preceding claims, **characterised in that** a function component is built up of at least one management activity.

6. A management system according to the preceding claims, **characterised in that** a management domain consists of one or more management object groups to be managed.

7. A management system according to the preceding claims, **characterised in that** a management object group consists of one or more management objects to be managed.

8. A management system according to the preceding claims, **characterised in that** management objects may consist of one or more computers connected to said network and communicating over said network and other equipment.

9. A management system according to the preceding claims, **characterised in that** a management activity activates means present on the graphical user interface for said specific management activity or makes said means available to a management functionary.

10. A management system according to the preceding claims, **characterised in that** a management activity comprises one or more commands by means of which at least one management tool can be controlled.

11. A management system according to the preceding claims, **characterised in that** the commands associated with a management activity are placed in an action table upon activation of said management activity or that said management activity itself is placed in said action table.

12. A management system according to the preceding claims, **characterised in that** one or more management tools are installed on at least one of the computers in said network.

13. A management system according to claim 12, **characterised in that** said commands from said action table activate parts of a management tool by means of a "daemon".

14. A management system according to claim 12, **characterised in that** said management activities from said action table are translated into commands for one or more management tools by means of a "daemon", which management tools are subsequently activated by said "daemon".

15. A management system according to claim 12, **characterised in that** said commands from said action table are transmitted to an active management tool via one or more buffers or fifo's by means of a "daemon" for further execution.

16. A management system according to claim 12, **characterised in that** said action table is linked with one or more active management tools, and that said management tools execute said commands.

17. A method for carrying out management instructions, comprising the steps of
• inputting management instructions via a user interface,
• authorising management functionaries for at least one function,
• authorising management functionaries for at least one management domain,
• translating management instructions into commands for management tools.

18. A method according to claim 17, wherein a management functionary may have one or more authorisations.

19. A method according to claims 17 - 18, wherein an authorisation consists of the linking of a user name, a management function and a management domain.

20. A method according to claims 17 - 19, wherein a management function is built up of at least one function component.

21. A method according to claims 17 - 20, wherein a function component is built up of at least one management activity.

22. A method according to claims 17 - 21, wherein a management domain consists of one or more management object groups to be managed.

23. A method according to claims 17 - 22, wherein a management object group consists of one or more management objects to be managed.

24. A method according to claims 17 - 23, wherein management objects may consist of one or more computers connected to said network and communicating over said network and other equipment.

25. A method according to claims 17 - 24, wherein a management activity activates means present on the graphical user interface for said specific management activity or makes said means available to a management functionary.

26. A method according to claims 17 - 25, wherein a management activity comprises one or more commands by means of which at least one management tool can be controlled.

27. A method according to claims 17 - 26, wherein the commands associated with a management activity are placed in an action table upon activation of said management activity.

28. A method according to claims 17 - 27, wherein a management activity, upon activation thereof, is placed in an activation table together with the management objects on which said management activity is to be carried out.

29. A method according to claims 17 - 28, **characterized in that** one or more management tools are installed on at least one of the computers in said network.

30. A method according to claim 29, wherein said commands from said action table activate parts of a management tool by means of a "daemon".

31. A method according to claim 29, wherein said management activities from said action table are translated into commands for one or more management tools by means of a "daemon", which management tools are subsequently activated by said "daemon".

32. A method according to claim 29, wherein said commands from said action table are transmitted to a management tool via one or more buffers or fifo's by means of a "daemon" for further execution.

33. A method according to claim 29, wherein said action table is linked with a management tool, and that said management tool executes said commands.

34. A software package stored on one or more floppy disks, CD-ROMs or other magnetic, optical or other carriers, which is to be installed on a computer or a server or a workstation in a computer network, for carrying out management instructions comprising:
• means for inputting management instructions via a user interface upon being activated,
• means for authorising management functionaries for at least one function upon being activated,
• means for authorising management functionaries for at least one management domain upon being activated,
• means for translating management instructions into commands for management tools upon being activated.

35. A software package according to claim 34, **characterised in that** a management functionary may have one or more authorisations.

36. A software package according to claims 34 - 35, **characterised in that** an authorisation consists of the linking of a user name, a management function and a management domain.

37. A software package according to claims 34 - 36, **characterised in that** a management function is built up of at least one function component.

38. A software package according to claims 34 - 37, **characterised in that** a function component is built up of at least one management activity.

39. A software package according to claims 34 - 38, **characterised in that** a management domain consists of one or more management object groups to be managed.

40. A software package according to claims 34 - 39, **characterised in that** a management object group consists of one or more management objects to be managed.

41. A software package according to claims 34 - 40, **characterised in that** management objects may consist of one or more computers connected to said network and communicating over said network and other equipment.

42. A software package according to claims 34 - 41, **characterised in that** a management activity activates means present on the graphical user interface for said specific management activity or makes said means available to a management functionary.

43. A software package according to claims 34 - 42, **characterised in that** a management activity comprises one or more commands by means of which at least one management tool can be controlled.

44. A software package according to claims 34 - 43, **characterised in that** the commands associated with a management activity are placed in an action table upon activation of said management activity.

45. A software package according to claims 34 - 44, **characterised in that** a management activity, upon activation thereof, is placed in an activation table together with the management objects on which said management activity is to be carried out.

46. A software package according to claims 34 - 45, **characterized in that** one or more management tools are installed on at least one of the computers in said network.

47. A software package according to claim 46, **characterised in that** said commands from said action table activate parts of a management tool by means of a "daemon".

48. A software package according to claim 46, **characterised in that** said management activities from said action table are translated into commands for one or more management tools by means of a "daemon", which management tools are subsequently activated by said "daemon".

49. A software package according to claim 46, **characterised in that** said commands from said action table are transmitted to a management tool via one or more buffers or fifo's by means of a "daemon" for further execution.

50. A software package according to claim 46, **characterised in that** said action table is linked with a management tool and that said management tool executes said commands.
